# EUROPÄISCHE PATENTSCHRIFT

(11) **EP 3 760 956 B1**
(45) Veröffentlichungstag und Bekanntmachung des Hinweises auf die Patenterteilung: **30.08.2023**
(21) Anmeldenummer: 19184350.7
(22) Anmeldetag: 04.07.2019
(51) Int. Cl.: F27B 17/02, G01K 7/25

(54) **DENTALOFEN**
DENTAL OVEN
FOUR DENTAIRE

(43) Veröffentlichungstag der Anmeldung: 06.01.2021
(73) Patentinhaber: Ivoclar Vivadent AG, 9494 Schaan (LI)
(72) Erfinder: SCHLEGEL, Manuel, 8887 Mels (CH); RUDOLF, Jussel, 6899 Feldkirch (AT); MÜLLER, Dominik, 6844 Altach (AT)
(74) Vertreter: Baldus, Oliver

(56) Entgegenhaltungen:
- WO-A1-91/08441
- WO-A1-2017/121616
- DE-B3-102016 206 447
- JP-A- 2002 357 484
- US-A- 4 106 341
- CHAKRAVARTY R K ET AL: "Linearization of thermistor resistance-temperatute characteristics using active circuitry", REV. SCI. INSTRUM,, Bd. 48, Nr. 12, 1. Dezember 1977 (1977-12-01), Seiten 1645-1649, XP001412166,

## Beschreibung

Die Erfindung betrifft einen Dentalofen, gemäß dem Oberbegriff von Anspruch 1.

Zu Dentalöfen gehören sämtliche Vorrichtungen, welche zur Wärmebehandlung von Dentalmaterialien eingesetzt werden. Dies können Wärmebehandlungsprozesse wie das Brennen von dentalen Keramiken sein, die Presstechnik, die Vorwärmung von Pressmuffeln, das Sintern von Keramik oder auch Entbinderungsprozesse wie auch Heisspolymerisationsgeräte.

Dentalöfen werden einerseits als Brennöfen andererseits als Pressöfen in weitem Umfang eingesetzt, um aus einer Dentalkeramik bestehende Dentalrestaurationsteile in die gewünschte Form zu bringen bzw. zu brennen.

Voraussetzung für ein gutes Brennergebnis ist es, dass das vom Hersteller vorgeschriebene Temperaturprofil, die sogenannte Brennkurve, genau eingehalten wird.

Hierzu werden typischerweise in Dentalöfen hochwertige Thermoelemente eingesetzt, die vorab kalibriert werden und die den Temperaturverlauf an der Messstelle mit einer Genauigkeit von einigen Grad und sogar einigen Zehntel Grad erfassen.

Gegenüber der Genauigkeit eines solchen Thermoelements fällt die räumliche Einhaltung der Temperatur deutlich ab. So sind typischerweise innerhalb von Heizräumen die Temperaturgradienten mehrere 10 Grad oder sogar über 100 Grad groß.

Beim schnellen Aufheizen können sogar Temperaturgradienten von mehr als 200 ° C entstehen.

Dies gilt insbesondere auch für Pressöfen, denn die im Pressofen verwendete Muffel hat im Vergleich mit dem luftgefüllten Heizraum eine erheblich höhere Wärmekapazität, so dass sie sich langsamer aufheizt. Die vom Thermoelement gemessene Temperatur an der Oberfläche der Muffel mag dann zum Beispiel 800° betragen, während der Rohling in der Muffel beispielsweise erst 400° warm ist.

Solchen Messfehlern wird durch recht komplizierte Vorgaben für die Brennkurven der Hersteller Rechnung getragen, die dann auch noch von der Muffelgröße abhängen, so dass ein Brand mit einer 300g-Muffel deutlich anders verläuft als mit einer 100g-Muffel.

Insofern hat die Verwendung eines teuren Thermoelements für die Temperaturerfassung den Nachteil, dass trotz der hohen Eigen-Messgenauigkeit die Temperatur an der relevanten Stelle, also am Brenngut, nicht exakt erfasst werden kann.

Ferner ist es an sich bereits vorgeschlagen worden, die Temperaturmessung über den Widerstandswert des metallischen Heizdrahts vorzunehmen. Typischerweise nimmt der Widerstand eines Heizdrahts mit der Temperatur zu.

Aufgrund der bei Dentalöfen erforderlichen Temperaturbereiche kam eine solche Widerstands-Temperaturmessung bei Dentalöfen nicht in Betracht, hingegen beim Modellieren von Wachs in der Zahntechnik, wobei es bei dem Erwärmen von Wachs deutlich weniger auf die Genauigkeit der Temperatur ankommt.

Insofern sei auf die DE 31 31 217 A1 verwiesen.

Die Druckschrift DE 10 2016 206447 B3 betrifft ein Verfahren zur Kalibrierung eines Temperaturmessgeräts eines Dentalofens mit Hilfe eines Kalibrierkörpers.

Bei einem Dentalofen kann mindestens ein Wandabschnitt der Brennkammer geöffnet werden, um das Brenngut in die Brennkammer einzubringen. Das System ist normalerweise auf den Betrieb bei geschlossener Brennkammer ausgelegt. Es gibt jedoch Prozessschritte, welche bei offenem Wandabschnitt stattfinden (z.B. Vortrocknen bei nassen Restaurationen, Abkühlen). Bei diesen Prozessschritten ist die Information, welche durch das Thermoelement gewonnen werden kann, begrenzt.

Anstelle dessen hat man bei Dentalöfen auch mit Pyrometern gearbeitet, die ebenfalls recht teuer sind und mit welchen die Temperaturen des Brennguts aus der Ferne erfasst werden sollten.

Teilweise sind insofern sogar mehrere Pyrometer pro Dentalofen vorgeschlagen worden, mit entsprechenden Kostennachteilen.

Demgegenüber liegt der Erfindung die Aufgabe zu Grunde, einen Dentalofen gemäß dem Oberbegriff von Anspruch 1 zu schaffen, der hinsichtlich des Abfahrens des Temperaturprofils verbessert ist, wobei sich zudem Kostenvorteile oder zumindest kein Kostennachteil ergeben soll.

Diese Aufgabe wird erfindungsgemäß durch Anspruch 1 gelöst. Vorteilhafte Weiterbildungen ergeben sich aus den Unteransprüchen.

Während eine Temperaturerfassung über den Widerstand eines Heizelements an sich bekannt ist, ist es erfindungsgemäß vorgesehen, dass die Temperaturerfassung eines Dentalofens über einen Parameter des Heizelements, insbesondere dessen Widerstand, lediglich als Grundlage zu verwenden und Heizungssteuerung über eine Kompensationsvorrichtung zu realisieren. Als Parameter kann anstelle des Widerstands auch eine Widerstandsänderung, also die Ableitung des Widerstands, verwendet werden. Auch eine Kombination von Widerstand und Widerstandsänderung kann als Parameter verwendet werden.

Die Kompensationsvorrichtung berücksichtigt in erster Linie Nichtlinearitäten der physikalischen Parameter des Heizelements als Temperaturerfassungsvorrichtung, wobei diese Nichtlinearitäten die Widerstandszunahme bei Temperaturzunahme betreffen. Diese sind typischerweise nicht proportional zueinander, sondern nichtlinear.

Die Kompensationsvorrichtung berücksichtigt ggf. auch die Eigenheiten des Ofens selbst, wie beispielsweise die geometrische Anordnung von Heizelementen, die Dynamik des abzufahrenden Brennzyklus, Starttemperatur bzw. Durchwärmung des Ofens bei Prozessstart.

Betrachtet man die erste Ableitung, also insofern Delta R/Delta T, ist das Differential bei der Verwendung von Siliziumcarbid als Heizelement zu nächst negativ und dann positiv und bei der Vewendung von Molybdänsilizit positiv. Bei der Verwendung von FeCrAl- resp. FeCrNi-Verbindungen ist das Differential unterschiedlich, leicht positiv.

Die Kompensationsvorrichtung ist bevorzugt aber nicht hierauf beschränkt. Die Kompensationsvorrichtung soll vorteilhafterweise auch die Totzeit bei der Erwärmung des Brennguts, also der Dentalrestaurationsteile, basierend auf Ofenparametern berücksichtigen.

Um dies zu erreichen, wird bevorzugt zunächst eine Kalibration durchgeführt, und die ermittelten Werte werden in der Kompensationsvorrichtung der Temperaturerfassungsvorrichtung abgespeichert.

Die Heizungssteuerung steuert den Dentalofen basierend sowohl auf dem erfassten Parameter des Heizelements, z.B. basierend auf dem Widerstand, als auch basierend auf der Kompensationsvorrichtung. "Basierend" ist hier nicht ausschließend zu verstehen; vielmehr können auch weitere Messgrößen der Heizungssteuerung zugeleitet werden, diese werden dann ebenfalls für die Steuerung und Regelung des Dentalofens verwendet.

Zu diesen Messgrößen kann das Ausgangssignal eines Temperaturfühlers gehören, z.B. eines Thermoelements.

Erfindungsgemäß und überraschend lässt sich mit dieser Maßnahme eine ausreichend genaue, aber preiswerte Temperatursteuerung realisieren, da es nicht oder unbedingt erforderlich ist, ein teures Thermoelement, oder gar ein Pyrometer, für den erfindungsgemäßen Dentalofen einzusetzen.

Es ist vielmehr auch möglich, eine preisgünstiges, da edelmetallfreies Thermoelement einzusetzen. Dieses kann außerhalb der - heißen - Brennkammer, die hier auch als Heizraum bezeichnet ist, angebracht sein, z.B. in der Wärmedämmung.

Bei Bedarf kann insofern ein Thermoelement und/oder ein Pyrometer zusätzlich als Sensor für die Ofentemperatur eingesetzt werden. Die Regelung kann dann basierend sowohl auf den Ausgangssignalen von Pyrometer und/oder Thermoelement als auch dem Widerstand des Heizelements oder dessen Änderung erfolgen.

Es ist möglich, Pyrometer und/oder Thermoelement entnehmbar in dem Dentalofen anzubringen. Diese können für die Kalibrierung verwendet werden, oder auch als zusätzliche Temperaturfühler, wenn Redundanz zur Erhöhung der Regelsicherheit erwünscht ist.

Es besteht dann die Möglichkeit, ein preisgünstiges Thermoelement (Typ N oder Typ K) in der Wärmedämmung oder an der Aussenhaut oder an den Anschlüssen für zusätzliche Informationen anzubringen, um die Prozesssicherheit, resp. Genauigkeit oder Robustheit weiter zu erhöhen. Die Kosten für ein derartiges Thermoelement betragen etwa die Hälfte derjenigen der Ofen-Thermoelemente gemäß dem Stand der Technik.

Die Kombination der erfindungsgemäßen, kompensierten Heizelelemt-Widerstandserfassung mit einem preisgünstigen Thermoelement ermöglicht es, RegelÜberschwinger zu verhindern.

Erfindungsgemäß ist es ferner möglich, die Überlastung der Heizelemente zu verhindern.

Heizelemente haben eine Maximaltemperatur bzw. maximale Obeflächenlasten bei verschiedenen Temperaturen, welche nicht überschritten werden darf/dürfen.

Durch die Überwachung der elektrischen Eigenschaften der Heizelemente und der abgegebenen Leistung kann sichergestellt werden, dass diese Maxima nicht überschritten werden. Dies ist besonders bei Dentalöfen mit einer schneller Aufheizrate wichtig.

Bevorzugt ist es bei einem erfindungsgemäßen Dentalofen vorgesehen, dass das Heizelement Teil einer Heizvorrichtung ist, die den Heizraum heizt.

Besonders vorteilhaft ist die erfindungsgemäße Temperatursteuerung in der Situation, wenn Thermoelement und Heizelement beim Öffnen des Wandabschnittes nicht zusammen sind. Diese Situation kann bei der Vortrocknungsphase und/oder beim Abkühlen auftreten.

Erfindungsgemäß ist es besonders günstig, dass bei den verwendeten Materialien der Bereich, in dem sie Nichtlinearität am geringsten ist, besonders nah am Verwendungsbereich liegt.

In vorteilhafter Ausgestaltung ist der erfindungsgemäße Dentalofen nämlich als Vortrocknungsofen ausgebildet und arbeitet insofern im Bereich zwischen 80° und 1000°, bevorzugt zwischen 700° und 800°.

Dieser Bereich ist ein Bereich, in dem die Nichtlinearität bei etwa 3% pro 50° liegt, also nicht wesentlich verschieden ist von den aufsummierten Messfehlern.

Zudem ist die Nichtlinearität positiv, also nimmt der Widerstand um etwa 3% mehr zu als es bei einem linearen Verhältnis zwischen Widerstandszunahme und Temperaturzunahme zu erwarten wäre.

Im Hinblick auf diese vergleichsweise einfache Ausgangssituation ist es zwar auch möglich, über eine so genannte Lookup-Tabelle, also in digitaler Form, die Kompensationsvorrichtung zu realisieren.

Die Art der Realisierung hängt stark von dem abzudeckenden Temperaturbereich ab; wenn der erfindungsgemäße Dentalofen als Hochtemperatur-Brennofen realisiert ist, empfiehlt sich jedenfalls eine Lookup-Tabelle als Basis für die Kompensationsvorrichtung. Alternativ kann auch durch Ausmessen des Ofens eine Korrekturfunktion bzw. ein Modell als Basis für die Kompensationsvorrichtung erstellt werden.

Erfindungsgemäß ist es jedenfalls vorgesehen, dass die Heizungssteuerung basierend auf dem Widerstand des Heizelements zum einen und basierend auf der Kompensationsvorrichtung zum anderen den Dentalofen steuert und damit insofern einen Regelkreis bildet.

Allenfalls kann in den Regelkreis auch noch ein Thermoelement involviert sein. Die Kompensationsvorrichtung kann auch die Temperaturverteilung entlang der Längserstreckung des Heizelementes o.ä. umfassen.

Bei Bedarf kann der hier beschriebene Heizungsregelkreis separat ausgeführt sein und zusätzlich ein - bevorzugt innerer - Regelkreis für eine Strom-Spannungs-Regelung realisiert sein. Dieser Regelkreis kann beispielsweise als Steuerelement in Form einer preisgünstigen integrierten Schaltung realisiert sein, die dann an den Eingang eines Leistungshalbleiters angeschlossen ist.

Bevorzugt ist es bei einem erfindungsgemäßen Dentalofen vorgesehen, dass die Temperaturerfassungsvorrichtung die gemessenen Widerstandswerte des Heizelements und damit indirekt die Temperaturwerte im Heizraum fortlaufend abspeichert und damit ein Temperaturprofil des aktuellen Brennvorgangs über die Zeit fortlaufend erfasst.

Bevorzugt ist es bei einem erfindungsgemäßen Dentalofen vorgesehen, dass die Heizungssteuerung das Temperaturprofil, entsprechend dem Integral über den Temperaturverlauf, laufend überwacht und in die Regelung der aktuell einzustellenden Heizraumtemperatur zur Anpassung an die in Dentalrestaurationsteile einzubringende Soll-Wärmemenge einfließen lässt.

Die erfindungsgemäß bevorzugten Materialien können als metallkeramische Heizelemente bezeichnet werden. Diese Heizelemente haben einen vergleichsweise geringen Widerstand, insbesondere gilt dies bei Verwendung von Molybdänsilizit.

Während der Innenwiderstand eines Heizelements aus Kanthal-Draht beispielsweise 50 Ohm betragen kann, kann dieser bei einem Heizelement aus MoSi 0,02 Ohm betragen, so dass insofern ein Unterschied des Innenwiderstands um mindestens zwei Zehnerpotenzen besteht. Diesem wird durch entsprechende Wahl der Eingangsspannung bzw. des Eingangsstroms Rechnung getragen, oder beispielsweise, indem bei MoSi-Heizelementen eine Reihenschaltung oder eine Parallelschaltung realisiert wird.

Bevorzugt ist es bei einem erfindungsgemäßen Dentalofen vorgesehen, dass die Temperaturerfassungsvorrichtung als Messpannung eine Wechselspannung mit einem besonderen Wechselspannungsprofil abgibt, das sich von einer Sinuswelle unterscheidet und dessen Form und/oder Frequenz zur Ausfilterung von Störimpulsen und Störfrequenzen diskriminierbar sind.

Bevorzugt ist es bei einem erfindungsgemäßen Dentalofen vorgesehen, dass die Temperaturerfassungsvorrichtung Messanschlüsse aufweist, die im Betrieb im heißen Bereich des Heizelements liegen, und welche undurchflossen von Heizstrom sind.

Das erfindungsgemäß hier so bezeichnete Heizelement ist dasjenige, das für die Temperaturerfassung verwendet wird.

Der einfachste, günstigste und vorteilhafteste Fall ist, wenn Heizstrom = Messstrom. Damit ist ein zusätzlicher Messanschluss hinfällig.

In einer weiteren Ausgestaltung weist das Heizelement einen Messanschluss auf, der im Bereich des Heizelementes liegt, das im Betrieb heiß wird. Es können auch zwei entsprechende, von einander beabstandete Messanschlüsse realisiert sein. Diese Lösung hat den Vorteil, dass stets nur der betreffende heiße Bereich des Heizelelements in die Messung mit einbezogen wird.

Diese Lösung ist bei Vorwärmöfen mit den entsprechend geringeren Temperaturen bevorzugt, während bei Hochtemperatur-Brennöfen aufgrund der ansonsten bestehenden Probleme die Messanschlüsse im kalten Bereich des Heizelements vorgesehen sind und der kalte Abschnitt des Heizelements dann in der Kompensationsvorrichtung berücksichtigt wird.

Erfindungsgemäß ist es günstig, wenn die Heizvorrichtung mehrere Heizelemente aufweist, von denen eines als Mess-Heizelement zur Heizung und für die Temperaturerfassung verwendet wird und die anderen rein zur Abgabe von Heizenergie dienen. Dies vereinfacht und reduziert den schaltungstechnischen Aufwand für die erfindungsgemäße Temperaturerfassung.

Auch wenn hier die Messung des Widerstands als erfinderisch auszunutzende Maßnahme herausgestellt ist, versteht es sich, dass beliebige andere elektrische Parameter des Heizelements in die Messung einbezogen werden können; auch diese Parameter seien hier unter dem Begriff "Widerstand" subsumiert. Insbesondere gehört zu dem Widerstand nicht nur der ohmsche Widerstand, sondern auch Scheinwiderstände wie induktive und/oder kapazitive Widerstände, aber auch weitere physikalische elektrische Parameter.

Der Widerstand muss nicht explizit gemessen werden. Es ist auch möglich, andere Inputs z.B. Leistungsstellerdaten (Wirkungsgrad o.ä.) zu verwenden. Dieser Input muss mit dem Widerstand der Heizelemente korrelieren.

Dadurch, dass Spannung und Strom als Eingangsgrössen zur Verfügung stehen kann sowohl der Heizelement-Widerstand, welcher mit der Heizelement-Temperatur korreliert, als auch die abgegebene Heizleistung kalkuliert werden.

Besonders günstig ist die Messung des Heizelement-Widerstands nur dann, wenn nicht aktiv geheizt wird.

Wird von den Heizelementen keine oder nur eine sehr geringe Leistung abgegeben, dann homogenisiert sich die Temperatur in der Brennkammer, d.h. die Heizelementtemperatur entspricht im Optimalfall der Temperatur an jedem anderen Ort in der Brennkammer.

Wird in diesem Zustand ein kleiner "Messtrom" auf die Heizelemente gegeben, welcher nur eine sehr kleine Heizleistung bewirkt, aber die Messung des Widerstandes erlaubt, so lässt sich dadurch direkt die Temperatur in der Brennkammer abschätzen.

Es können auch bewusst "Heizpausen" eingeführt werden, um den Effekt der Temperaturüberhöhung der Heizelemente auszuschliessen.

In weitere vorteilhafter Ausgestaltung ist eine periodische Abschaltung von Heizelementen vorgesehen.

Wenn mehrere Heizelemente in einem Ofen verbaut sind und diese einzeln ansteuerbar sind , kann auch im Heizprozess jeweils für kurze Zeit der Heizstrom für ein einzelnes Heizelement abgeschaltet werden und dieses nur mit einer "Messleistung" beaufschlagt werden, um so dessen Widerstand im passiven Zustand zu ermitteln. Danach kann das nächste Heizelement auf "messen " gestellt werden, u.s.w.

Dadurch lässt sich nicht nur eine etwaige durch die aktive Heizung des Heizelementes auftretende "Überhitzung" des Heizelements bei der Messung eliminieren, sondern es lässt sich auch eine Information über die Homogenität der Heizung in der Brennkammer gewinnen.

Besonders günstig lässt sich der erfindungsgemäße Dentalofen und das zugehörige Verfahren in speziellen Phasen des Gesamtprozesses einsetzen, insbesondere beim Vortrocknen.

Sobald ein Wandabschnitt der Brennkammer, also des Heizraumes, geöffnet ist, verändert sich das Heizverhalten bzw. die Verteilung und der Verlauf der Energieeinbringung stark.

Beim Stand der Technik lässt sich je nach Position des Temperatursensors und Bauart des Ofens der Messwert des Temperatursensors dabei nicht mehr sinnvoll verwenden, um die Temperatur bzw. den Verlauf der Energieeinbringung ins Objekt zu kontrollieren. Dies ist im Speziellen beim Vortrocknen in einem Ofen mit beweglichem Thermoelement und/oder mit einem beweglichen Brennkammerboden der Fall.

Insofern wird auf den Dentalofen Bezug genommen, der in der EP 3 338 767 A1 beschrieben ist; auf diese Druckschrift wird hier vollinhaltlich Bezug genommen.

Typischerweise ist in so einem Fall eine weniger genaue Prozesskontrolle nötig als im Sinter- oder Kristallisationsprozess.

In diesem Falle kann die Prozesskontrolle alleine über die Messung der elektrischen Eigenschaften der Heizelemente erfolgen. Dabei kann dann auf einen bestimmten Heizelement-Widerstand als Sollwert geregelt, und nicht auf eine Temperatur. Dadurch wird der Prozess auch ohne Temperatursensor reproduzierbar.

Auch weitere Anwendungsfälle der Prozesskontrolle sind über die elektrischen Eigenschaften der Heizelemente möglich.

Hierzu gehört die Kontrolle des Einfahrbrandes oder Regenerationsbrandes.

MoSi-Heizelemente bedürfen vor der Anwendung im Dentalofen eines Einfahrbrandes, welcher dazu dient, die SiO2-Schutzschicht auf den Heizelementen homogen aufzubauen. Wird dieser Einfahrbrand gemäß dem Stand der Technik über den verbauten Temperatursensor kontrolliert, so ist die aktuelle Temperatur der Heizelemente immer unbekannt, da diese immer grösser ist als die Temperatur, welche durch den Sensor gemessen wird.

Um dies zu umgehen, könnten Sensoren in unmittelbarer Umgebung der Heizelemente eingebaut werden. Dies wäre ein Zusatzaufwand .

Mit der erfindungsgemäßen Lösung kann der Einfahrbrand über die elektrischen Eigenschaften der Heizelemente kontrolliert werden, d.h. es wird auf ein Zeit-Wiederstandsprofil geregelt.

Unter der Voraussetzung, dass alle Heizelemente gleich sind, kann so ein für die Heizelemente exakt definiertes Profil abgefahren werden, (fast) unabhängig vom verwendeten Ofen(typen). Dasselbe gilt für den Regenerationsbrand.

Neben dem positiven Effekt, dass die Kontrolle dieser Brände genauer wird, kann auch der Entwicklungsaufwand reduziert werden, da bei der Entwicklung eines neuen Ofens der bereits existierende Einfahr - und Regenerationsbrand 1:1 übernommen werden kann.

Eine weitere erfindungsgemäße Möglichkeit ist die Überprüfung der Brennkammer, insbesondere der Heizelemente und der Anschlusstechnik.

Durch die Messung der elektrischen Eigenschaften der Heizelemente kann der Zustand der Heizelemente bzw. der Anschlusstechnik automatisch überprüft werden.

Auch die Anschlusstechnik ist im Messkreis, so dass Fehlfunktionen erfasst werden.

Wird bei verschiedenen Durchläufen des gleichen Heizprofils der Heizelementwiderstand aufgenommen, so kann daraus folgendes geschlossen werden, und entsteht eine Veränderung des Widerstandsprofils, kann die Notwendigkeit eine Wartung ermittelt werden:
Bei MoSi-Heizelementen bleiben die Widerstände der Heizelemente konstant. Das bedeutet, dass bei einer Veränderung des Widerstandsprofils kann auf Defekte bzw. Alterung der Anschlusstechnik geschlossen werden.

Bei SiC-Heizelementen verändert sich der Widerstand der Heizelemente durch die Alterung.

Entsprechend kann bei beiden Typen von Heizelementen ein nötiger Service vorhergesehen werden, bzw. allfällige Anpassungen im Ansteuerprofil vorgenommen werden, um gleichbleibende Heizeprofile zu garantieren.

Besonders günstig ist ferner die Möglichkeit der Überprüfung des Zustandes der Brennkammer.

Durch einen kurzen Messimpuls und einer Aufnahme des Widerstandes der Heizelemente kann zu jedem Zeitpunkt und in jeder Position der thermische Zustand der Brennkammer resp. der unmittelbaren Umgebung der Heizelemente überprüft werden. Dies ist insbesondere bei einem Ofen mit beweglichem Thermoelement und/oder mit einem beweglichen Brennraumboden von Bedeutung.

Wenn das Thermoelement in seiner Position verändert wird oder ganz aus dem Heizraum entfernt wird, ist keine Messung mehr möglich.

Wenn der Brennraumboden nach oben durch den Heizraum in eine Presenterposition gemäß der EP 3 338 767 A1 verfahren wird, ist dort im offenen Zustand keine Information zur Temperatur in der Brennkammer verfügbar. Das Thermoelement, das sich durch den Deckel erstreckt, wird mit nach oben verfahren und befindet sich dann deutlich oberhalb der Brennkammer.

Durch die Überprüfung des Widerstandes der Heizelemente kann dann entschieden werden, ob die Bedingungen für den Start eines neuen Programms bereits erfüllt sind.

Weitere Vorteile, Einzelheiten und Merkmale ergeben sich aus der nachfolgenden Beschreibung mehrerer Ausführungsformen der Erfindung anhand der Zeichnung.

Es zeigen:
- Fig. 1: eine schematische Darstellung eines erfindungsgemäßen Dentalofens, unter Darstellung der für die Erfindung wesentlichen Bestandteile;
- Fig. 2: die Widerstands-/Temperaturkennlinie eines MoSi- Heizelements eines erfindungsgemäßen Dentalofens in einer Ausführungsform;
- Fig. 3: eine weitere Widerstands-/Temperaturkennlinie in normierter Form;
- Fig. 4: einen typischen Regelkreis einer Temperaturregelung eines Dentalofens gemäß dem Stand der Technik;
- Fig. 5: eine Ausführungsform der Erfindung unter Darstellung eines erfindungsgemäßen Regelkreises, wobei bei dieser Ausführungsform kein Thermoelement verwendet wird; und
- Fig. 6: eine Ausführungsform der Erfindung unter Darstellung eines erfindungsgemäßen Regelkreises, wobei bei dieser Ausführungsform ein Thermoelement verwendet wird.

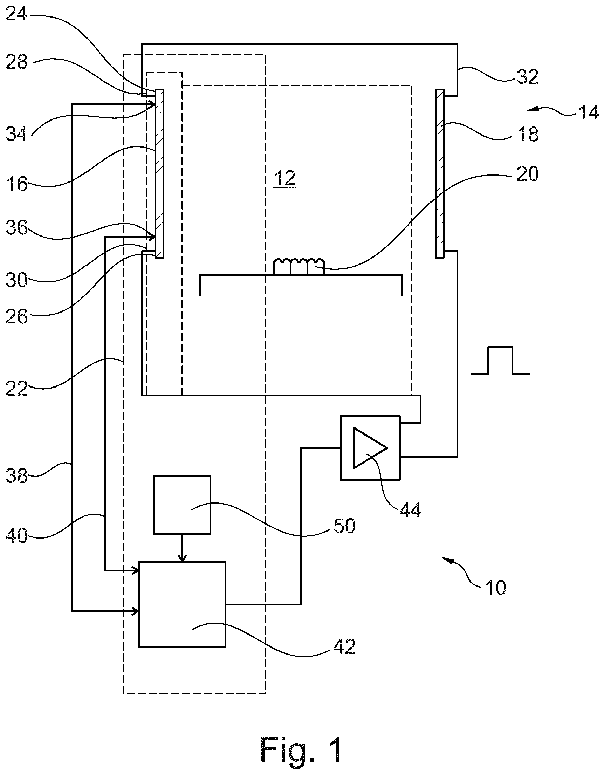

Aus Fig. 1 ist ein Dentalofen 10 mit seinen für die Erfindung relevanten Teilen schematisch ersichtlich.

Hierzu gehört ein Heizraum 12, der von einer Heizvorrichtung 14 beheizbar ist. Die Heizvorrichtung 14 besteht aus mehreren Heizelementen, von denen aus Fig. 1 die Heizelemente 16 und 18 ersichtlich sind. Die Heizelemente erstrecken sich ringförmig um den Heizraum 12.

Der Heizraum 12 ist für die Aufnahme von Dentalrestaurationsteilen 20 bestimmt, die in Fig. 1 schematisch dargestellt sind. Auch wenn hier der Dentalofen 10 als Brennofen ausgebildet ist, versteht es sich, dass anstelle dessen auch ein Pressofen mit einer Muffel erfindungsgemäß ausgebildet sein kann, oder ein Sinterofen, ein Kristallisationsofen, ein Vorwärmeofen, eine Vortrocknungseinrichtung, ein Entbinderungsofen oder ein Heisspolymerisationsofen.

Der dargestellte Dentalofen 10 ist multifunktional, lässt sich also sowohl als Vorwärmofen mit Temperaturen um 800°, aber auch als Hochtemperatur-Sinterofen mit Temperaturen um 1800° einsetzen. Dementsprechend sind die Heizelemente temperaturfest. Im dargestellten Ausführungsbeispiel bestehen sie aus SiC.

In dem dargestellten Ausführungsbeispiel ist das Heizelement 16 Teil einer Temperaturerfassungsvorrichtung 22. Es weist Heizstromanschlüsse 24 und 26 auf, die an dem Heizelement 16 angebracht sind, und zwar an zwei voneinander beabstandeten Stellen. Das Heizelement wird durchflossen von dem Heizstrom, der auch weitere Heizelemente wie zum Beispiel das Heizelement 18 durchfließt.

Im dargestellten Ausführungsbeispiel durchtritt die Heizstromleitung je eine Durchführung 28 bzw. 30, an welcher die Heizstromleitung 32 eine nicht dargestellte Wärmedämmung des Ofens durchtritt.

Durch den Heizstrom entsteht ein Spannungsabfall an dem Heizelement, und das Heizelement heizt sich auf und beheizt damit auch den Heizraum 12.

Im dargestellten Ausführungsbeispiel sind zusätzlich zu dem Heizstromanschlüssen 24 und 26 an dem Heizelement 16 ein Messstromanschluss 34 nahe dem Heizstromanschluss 24 und ein Messstromanschluss 36 nahe dem Heizstromanschluss 26 an dem Heizelement angebracht. Die betreffenden Messleitungen 38 und 40 können durch die Durchführungen 28 und 30 mit hindurch geführt werden.

Diese Ausführungsform hat den Vorteil, dass die Änderung des Innenwiderstands des Heizelements 16 nur im Bereich des Heizraums 12 vollständig in den Messstrom einfließt.

Die Temperaturerfassungsvorrichtung 22 weist eine Steuervorrichtung 42 auf. Die Steuervorrichtung 42 hat einen Ausgangsanschluss, der mit der Heizungssteuerung 44 verbunden ist und diese und damit den Heizstrom in der Heizstromleitung 32 steuert und regelt.

Die Steuervorrichtung 42 stellt auch den Messstrom in den Messleitungen 38 und 40 bereit. Es wird der Spannungsabfall über das Heizelement gemessen. Bevorzugt ist das Heizelement 16 als Messwiderstand in eine an sich bekannte Widerstandsmessbrücke eingebunden.

Es ist auch möglich, den Heizstromanschluss 24 und den Messstromanschluss 34, und entsprechend den Heizstromanschluss 26 und den Messstromanschluss 36 je in einem Anschluss zusammen zu fassen. Ein Teil des vom Heizstrom durchflossenen Bereichs der Heizstromleitung ist dann jedoch kalt und trägt insofern nichts zum Messergebnis bei.

Bevorzugt sind die Messleitungen 38 und 40 ausgesprochen niederohmig und die Messstromanschlüsse 34 und 36 haben einen sehr geringen Übergangswiderstand zum Heizelement 16.

Der Messstrom im Messkreis ist so gewählt, dass er die aktuelle Temperatur des Heizelements nicht oder nicht messbar beeinflusst, also das Heizelement nicht weiter erwärmt. Beispielsweise kann der Messstrom 5 mA betragen, und die Messspannung 20 mV, entsprechend einem Innenwiderstand des aus SiC bestehenden Heizelements 16 von 4 Ohm.

Das Heizelement 16 ist Teil der Temperaturerfassungsvorrichtung 22 und dient als Messwiderstand. Es bildet dem Grunde nach die Temperatur während des Heizens ab, und zwar die Temperatur des Heizelements 16.

Die Temperatur des Dentalrestaurationsteils 20 ist typischerweise deutlich geringer als die des Heizelements 16, zumindest während der Temperaturänderung.

Außerdem nimmt der Innenwiderstand des Heizelements 16 mit zunehmender Temperatur zu, aber nicht exakt proportional, sondern nichtlinear.

Die Ansteuerung der Heizungssteuerung erfolgt nun so, dass grundsätzlich der gemessene Widerstand des Heizelements 16 als Basis für die Regelung verwendet wird. Darüber hinaus wird allerdings auch das Ausgangssignal einer Kompensationsvorrichtung 50 berücksichtigt, die ebenfalls Teil der Temperaturerfassungsvorrichtung 22 ist.

Die Kompensationsvorrichtung 50 kompensiert die Nichtlinearität des Heizelements 16. Diese letztere ist materialabhängig und an sich bekannt. Bei Bedarf kann eine Messkurve des aktuell verwendeten Heizelements für die Kalibrierung durchgefahren und abgespeichert werden, so dass die Nichtlinearitäten ofenspezifisch in der Kompensationsvorrichtung abgelegt sind und die Steuervorrichtung 22 insofern die exakte Temperatur des Heizelements 16 ermitteln kann.

Ferner ist es auch möglich, den Temperaturgradienten bei der Aufheizung rechnerisch zu berücksichtigen, ebenfalls in der Temperaturerfassungsvorrichtung 22, insbesondere in der Kompensationsvorrichtung 50. Ein großer Temperaturgradient wie zum Beispiel 50° pro Minute oder gar 80° pro Minute führt zu einer großen Temperaturdifferenz zwischen dem Dentalrestaurationsteil 20 und dem Heizelement 16.

Wenn das Heizelement 16 auf einer konstanten Temperatur gehalten wird, basierend auf der Regelung durch die Temperaturerfassungsvorrichtung 22, bedeutet dies anschließend an eine Periode raschen Aufheizens noch nicht, dass die Temperaturdifferenz, also der örtliche Temperaturgradient im Heizraum 12 auf Null fällt; dies erfolgt lediglich allmählich, basierend auf der Wärmeübertragung über Konvektion und über Wärmestrahlung.

Diese beiden Abweichungen zwischen der Temperatur des Heizelements 16 und der des Dentalrestaurationsteils 20 lassen sich empirisch und/oder rechnerisch berücksichtigen und können ebenfalls in die Regelung einfließen.

Die insofern getroffenen Maßnahmen können beispielsweise gemäß der EP 1 915 972 B1 getroffen werden, auf die hier vollinhaltlich Bezug genommen wird.

In der hier dargestellten Ausführungsform ist es vorgesehen, den Heizstrom durch die Heizstromleitung 32 in Impulsform zu leiten. In Impulspausen wird das Heizelement 16 von Messstrom durchflossen. Die Impulspause kann z.B. 10ms lang sein.

Im Verhältnis zur Impulspausenlänge ist der zeitliche Temperaturgradient gering. Eine lange Impulspause kann genutzt werden, um das Verhalten während der Pause aufzunehmen und dadurch Rückschlüsse über die Durchwärmung des Ofens zu ziehen. Eine langsame Abkühlung während der Pause bedeutet, dass der Ofen stark durchwärmt ist.

Beispielsweise kann die Messung in jeder dritten Impulspause erfolgen und zwar vorsorglich nicht unmittelbar mit Beginn der Impulspause, sondern beispielsweise bei 10% der Länge der Impulspause, wobei die Messzeit dann bei beispielsweise 20% der Impulspause abgeschlossen sein kann. Damit ist ausgeschlossen, dass sich das Heizelement 16 um mehr als einige zehn bis hundert Milligrad abkühlt und insofern das Messergebnis verfälscht ist.

Bei 10% der Impulspause sollten etwaige durch den hohen Heizstrom erzeugten physikalischen Effekte wie insbesondere Gitterschwingungen, Selbstinduktion und so weiter abgeklungen sein, so dass diese ebenfalls nicht den Messstrom beeinflussen können.

Erfindungsgemäß ist es besonders vorteilhaft vorgesehen, dass die hier dargestellte Form der Temperaturreglung während des Prozessschritts des Vortrocknens eingesetzt wird. Bei diesem Prozessschritt ist ein Wandabschnitt geöffnet und dadurch die Regelung über ein Thermoelement stark erschwert, je nach Ausführung des Ofens sogar unmöglich..

Erfindungsgemäß ist auch bei geöffnetem Wandabschnitt eine gute Temperaturregelung mit den Merkmalen von Anspruch 1 dennoch möglich, und zwar mit befriedigender Genauigkeit, und das auch noch über den gesamten Arbeitsbereich.

Es ist auch möglich, den erfindungsgemäßen Dentalofen ausschließlich oder zusätzlich als Brennofen zu verwenden, beispielsweise bei Termperaturen bis 1800°C. Auch hierbei dient die erfindungsgemäße Temperaturerfassungsvorrichtung der Regelung der Temperatur.

Ferner ist es auch möglich, zusätzlich zu der hier dargestellten Temperaturerfassung über die Temperaturerfassungsvorrichtung 22 ein Thermoelement oder ein sonstiges Temperaturerfassungselement zu verwenden. Hierbei ist es dann möglich, dass die beiden Möglichkeiten der Temperaturerfassung einander kontrollieren oder ergänzen.

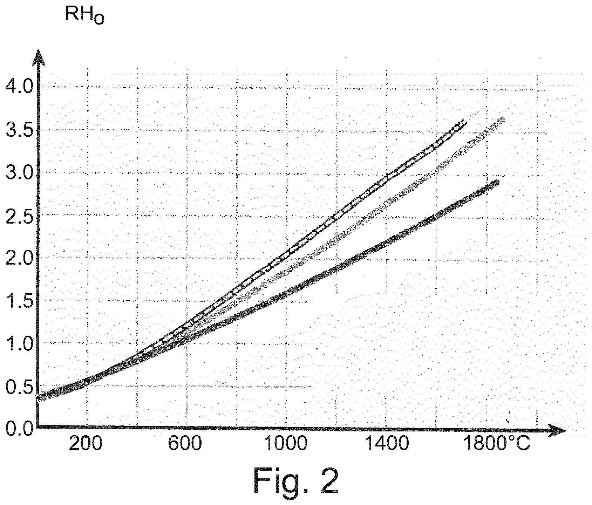

In Fig. 2 ist aufgetragen, in welcher Weise sich der spezifische Widerstand, aufgetragen über die Temperatur, nichtlinear entwickelt. Der spezifische Widerstand Rho des hier gemessenen Materials, nämlich Molybdändisilizit, nimmt zunächst weniger stark zu und dann stärker, und zwar je nach verwendetem Material unterschiedlich.

In einem beispielhaften Versuch mit einem Dentalofen, unter Verwendung von SiC als Material für das Heizelement, wurden Temperatur-Messwerte von 100°C bis 1550°C ermittelt, und zudem normierte Widerstandswerte. Bei 650°C ist der normierte Widerstandswert 1,11, also nahezu halb so groß wie bei 100°C. Der normierte Widerstandswert nimmt bis 850°C nur um weniges, nämlich um 6% zu, so dass hier ein Bereich relativ geringer Nichtlinearität oder besserer Linearität vorliegt.

Bei 1550°C ist der normierte Widerstandswert dann allerdings auf 1,47 angestiegen, so dass die erfindungsgemäße Kompensationsvorrichtung 50 die Nichtliniearität kompensieren muss.

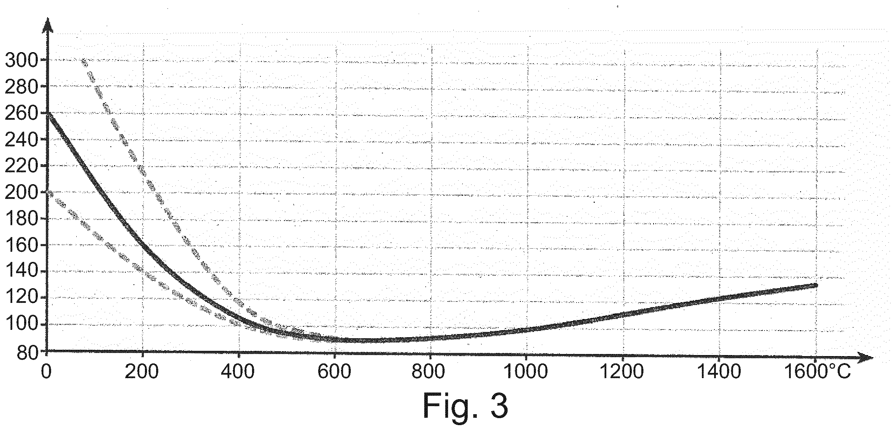

In Fig. 3 ist ebenfalls ein normierter Widerstandswert aufgetragen, hier für Siliziumcarbid. Auch hier ist ersichtlich, dass der nahezu lineare Bereich der Nichtlinearitätskurve bei weniger als 1100°C liegt, etwa im Bereich um 700°C.

Die in dem unteren Temperaturbereich ersichtliche Kurvenschar entspricht verschiedenen Formen der Siliziumcarbidverbindung, und hängt beispielsweise von dessen Reinheit ab.

Molybdändisilizid bildet bei - etwas - höheren Temperaturen eine passivierende Schicht aus Siliziumdioxid, die beispielsweise über einen Einfahrbrand erzeugt wird und dann das Siliziumcarbid schützt und dauerhaltbar macht. Idealerweise wird dieser Einfahrbrand direkt über die Eigenschaften der Heizelemente gesteuert, da bei diesem Einfahrbrand der zeitliche Ablauf der Temperatur der Heizelemente relevant ist für die Güte der SiO₂-Schicht.

In vorteilhafter Ausgestaltung wird nach dem Einfahrbrand und der Kalibrierung des Ofens eine Differenzkurve für die gemessene Temperatur im Verhältnis zur eingebrachten Heizleistung ermittelt und abgespeichert, beispielsweise in der Kompensationsvorrichtung 50.

Ein Testbrand wird beispielsweise automatisch oder manuell nach zum Beispiel 50 Brennzyklen durchgeführt. Wenn sich das Verhältnis zwischen eingebrachter Leistung und gemessener Temperatur um mehr als einen vorgegebenen Wert, beispielsweise 5% oder 10%, von der Referenzkurve unterscheidet, wird zur Neukalibrierung aufgefordert; wenn diese nicht mehr möglich ist, bedeutet dies, dass die Lebensdauer des Heizelements 16 und damit der weiteren Heizelemente erreicht ist.

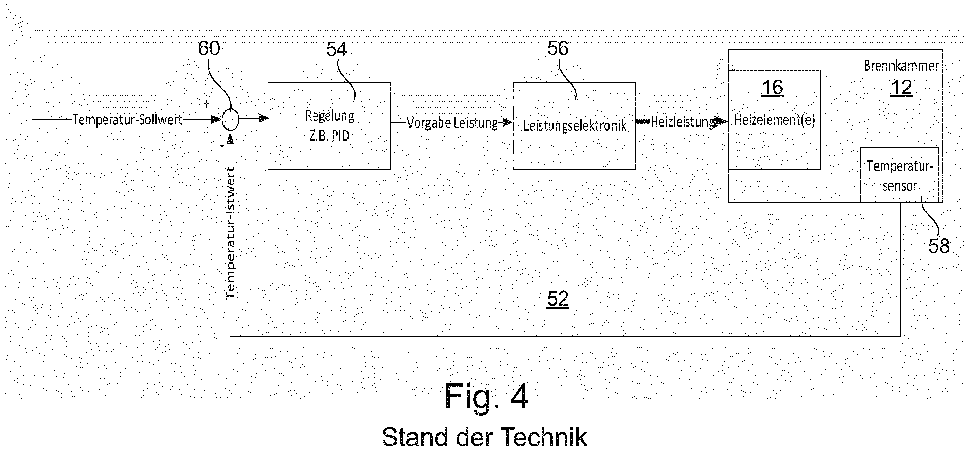

Fig. 4 zeigt einen Regelschaltkreis für einen an sich bekannten und weithin verwendeten Dentalofen. In an sich bekannter Weise wird die Temperatur als Sollwert eingestellt. Der Regelkreis 52 umfasst einen PID-Regler 54. Dieser gibt an seinem Ausgangsanschluss die Ofenleistung vor. Der Ausgangsanschluss des PID-Reglers 54 ist mit dem Eingangsanschluss der Leistungselektronik 56 verbunden, welche ihrerseits dafür sorgt, dass das Heizelement 16 oder die Heizelemente mit Heizleistung versorgt wird.

Das Heizelement 16 befindet sich in einer Brennkammer, die auch als Heitraum 12 bezeichnet wird.

In der Brennkammer 12 oder an der Wärmedämmung, die die Brennkammer 12 umgibt ist ein Temperatursensor 58 angeordnet, der letztlich die Temperatur an dieser Stelle des Heizraumes 12 misst und eigentlich die Temperatur der Dentalrestaurationen 20 erfassen soll.

Typischerweise besteht ein erheblicher Abstand zwischen der Dentalrestauration 20 und dem Temperatursensor 58. Aufgrund des lokalen Temperaturgradienten in dem Heizraum 12 vermag der Temperatursensor 58 daher die Temperatur der Dentalrestauration 20 nicht oder nicht genau erfassen.

Das Ausgangssignal des Temperatursensors 58 wird einem Vergleicher 60 zugeleitet, der die Regelung vorgibt, also, die Temperatur erhöht, wenn der Temperatur-Sollwert größer als der Temperatur-Istwert ist und letztlich die Heizleistung reduziert, wenn der Temperatur-Sollwert kleiner als der Temperatur-Istwert ist.

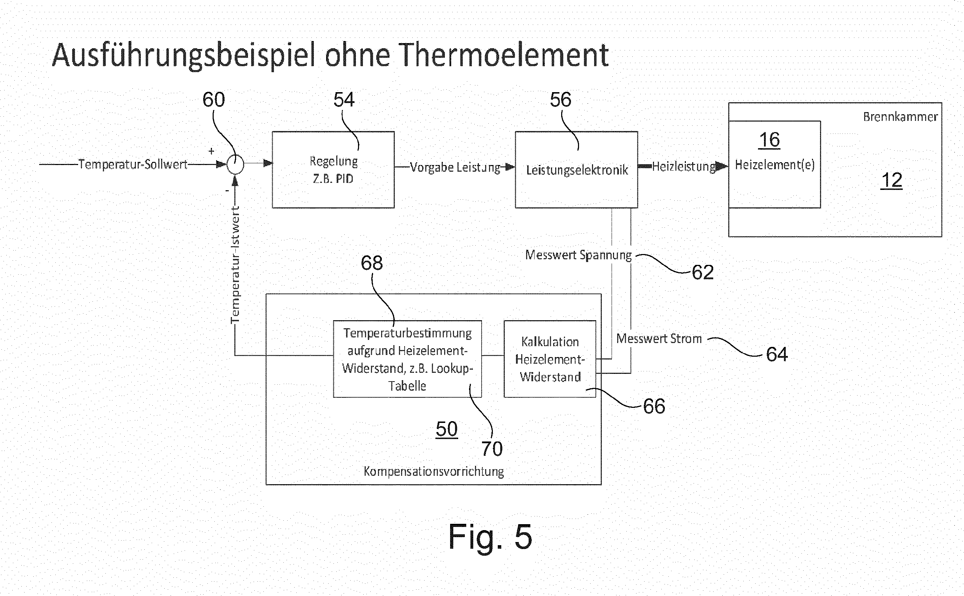

Ein Regelkreis 52 ist auch bei der erfindungsgemäßen Ausführungsform mit dem Blockschaltbild gemäß Fig. 5 vorgesehen. Dort wird ebenfalls ein PID-Regler 54 verwendet, und die Leistungselektronik 56 und das Heizelement 16 in dem Heizraum 12.

Ausgangsseitig der Leistungselektronik 56 sind jedoch Messbrücken angeordnet, die die abgegebene Spannung und den abgegebenen Strom erfassen sollen. Eine Messwert "Spannung" 62 und ein Messwert "Strom" 64 werden erfasst und verarbeitet.

Die betreffenden Messwerte können auch im Bereich der Leitungen zwischen der Leistungselektronik 56 und dem Heizelement 16 abgegriffen werden, oder auch dem Heizelement 16 benachbart.

Erfindungsgemäß werden die Messwerte "Spannung" 62 und "Strom" 64 der Kompensationsvorrichtung 50 zugeleitet. Die Kompensationsvorrichtung 50 umfasst einen Rechner 66 für die Kalkulation des Heizelemente-Widerstands, basierend auf den Messwerten für Spannung 62 und Strom 64.

Ferner umfasst die Kompensationsvorrichtung eine Temperaturbestimmungsvorrichtung 68, die zum Beispiel als Look-up-Tabelle 70 ausgebildet sein kann.

Der im Rechner 66 berechnete Heizelement-Widerstand wird der Temperaturbestimmungsvorrichtung 68 zugeleitet, so dass ausgangsseitig der Look-up-Tabelle 70 oder der Temperaturbestimmungsvorrichtung 68 die Isttemperatur als Temperatur-Istwert zur Verfügung gestellt wird. Dieser erfasste Temperatur-Istwert wird wie bei Fig. 4 dem Vergleicher 60 zugeleitet, und die Regelung erfolgt insofern in üblicher Weise.

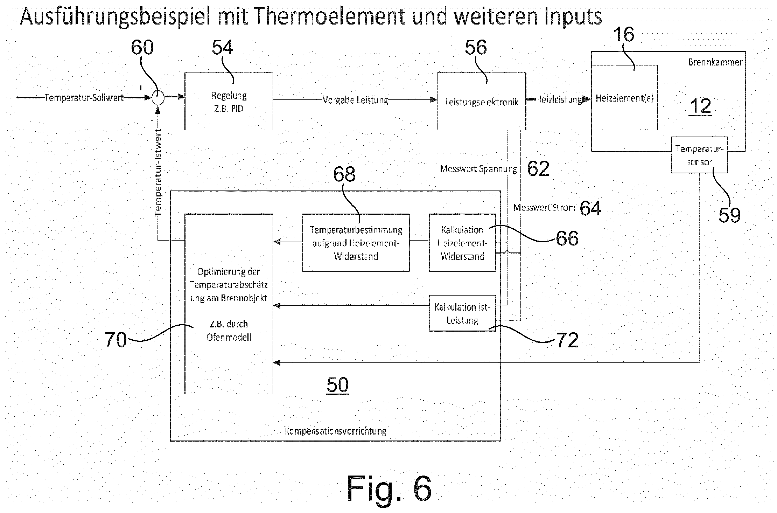

Eine weitere Ausführungsform eines erfindungsgemäßen Blockschaltbildes ist aus Fig. 6 ersichtlich. Dieses ist um den Temperatursensor aus dem Stand der Technik ergänzt und kombiniert insofern die Erfindung mit diesem.

Wie bei dem Blockschaltbild gemäß Fig. 4 ist ein Temperatursensor 59 dem Heizraum 12 zugeordnet. Wie aus Fig. 6 ersichtlich ist, ist er jedoch nur teilweise im Heizraum 12 und teilweise außerhalb angeordnet. Tatsächlich kann hier ein Temperatursensor 59 eingesetzt werden, der weniger temperaturfest ist und beispielsweise in der Mitte der Wärmedämmung des Dentalofens angebracht ist. Ein solcher Temperatursensor 59 kann beispielsweise 1/3 dessen kosten, was der Temperatursensor 58 aus Fig. 4 kostet.

Die Kombinationsvorrichtung 50 weist wie bei dem Blockschaltbild gemäß Fig. 5 einen Rechner 66 und eine Temperaturbestimmungsvorrichtung 68 auf. Diese haben die gleichen Funktionen.

Jedoch ist der Ausgangsanschluss der Temperaturbestimmungsvorrichtung 68 nicht mit dem Vergleicher 60 verbunden, sondern mit einer Optimierungsvorrichtung 70 verbunden. Die Optimierungsvorrichtung 70 dient dazu, die Temperaturabschätzung am Brennobjekt zu optimieren.

Der Ausgang des Temperatursensors 59 ist mit der Optimierungsvorrichtung 70 verbunden.

Die Optimierungsvorrichtung 70 hat in dem dargestellten Ausführungsbeispiel einen weiteren Eingangsanschluss, der mit einem Rechner 72 verbunden ist. Der Rechner 72 berechnet die Istleistung aus der Kombination des Messwertes "Spannung" 62 und des Messwertes "Strom" 64 und leitet die kalkulierte Istleistung der Optimierungsvorrichtung 70 zu.

Die Optimierungsvorrichtung 70 gibt einen Temperatur-Istwert ab, der dem Vergleicher 60 zugeleitet wird.

Die Soll-/Ist-Regelung gemäß dem Regelkreis 52 erfolgt sowohl bei der Ausführungsform gemäß Fig. 5 als auch bei derjenigen gemäß Fig. 6 zyklisch. Der Regelkreis 52 kann in konstanten Zeitabständen durchlaufen werden, wobei es auch möglich ist, bei schnellen Temperaturänderungen die Zeitabstände zu verkürzen und bei einer mehr oder weniger konstanten Temperatur die Zeitabstände zu verlängern.

Beispielsweise kann die Messung und Regelung alle 500 Millisekunden vorgenommen werden.

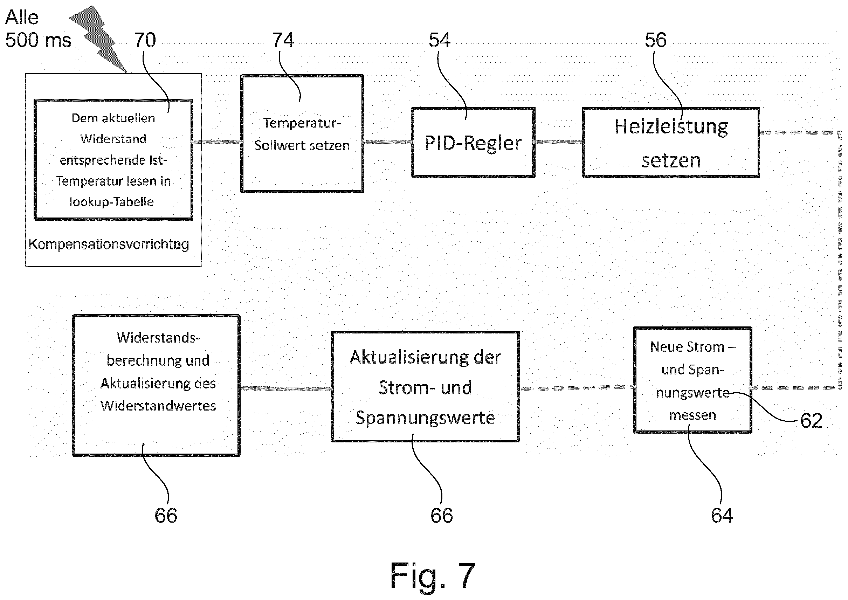

Aus Fig. 7 ist das Regelschema insofern ersichtlich. Innerhalb der Kompensationsvorrichtung 50 wird die Look-up-Tabelle 70 ausgelesen und damit die aktuelle Isttemperatur abgegeben. Die Sollwerttemperatur 72 wird gesetzt und die Regeldifferenz zwischen Sollwerttemperatur und Istwerttemperatur dem PID-Regeler 54 zugeleitet. Die Heizleistung wird über die Leistungselektronik 56 gesetzt. Neue Stromwerte 64 und Spannungswerte 62 werden basierend auf der aktuellen abgegebenen Leistung der Leistungselektronik 56 und des Heizelements 16 gemessen. Die gemessenen Werte werden im Rechner 66 ausgewertet, und es wird die Widerstandsberechnung vorgenommen und der Widerstandswert aktualisiert. Dies erfolgt ebenfalls im Rechner 66.

Der ermittelte neue Widerstandswert wird der Look-up-Tabelle 70 zugeleitet, und in weiteren 500 Millisekunden wird die Regelstrecke erneut durchlaufen.

Die Look-up-Tabelle als wichtiger Teil der Kompensationsvorrichtung 50 ist vorab empirisch festgelegt und ermöglicht eine recht genaue Temperaturbestimmung Nachfolgend ist eine auszugsweise Look-up-Tabelle 70 dargestellt.

**Look-up-Tabelle**

| Widerstand 4 Heizelemente in Mikroohm | Temperatur Heizelemente in Grad C |
|---|---|
| 26500 | 100,6 |
| 26600 | 101,8 |
| 26700 | 103,0 |
| 26800 | 104,2 |
| 26900 | 105,3 |
| 27000 | 106,5 |
| 160000 | 1214,6 |
| 160100 | 1215,3 |
| 160200 | 1216,0 |
| 160300 | 1216,7 |
| 160400 | 1217,3 |
| 212700 | 1600,5 |
| 212800 | 1601,3 |
| 212900 | 1602,1 |
| 213000 | 1602,9 |
| 213100 | 1603,7 |
| 213200 | 1604,6 |

## Patentansprüche

1. Dentalofen, insbesondere auch zur Vortrocknung von Dentalrestaurationsteilen,
- mit mindestens einem elektrischen Heizelement (16), das sich benachbart einem Heizraum (12) erstreckt und von einer Heizungssteuerung (44) angesteuert ist,
- welche Heizungssteuerung (44) die Temperatur in dem Heizraum (12) regelt und hierzu einen Ausgangsanschluss für das mindestens eine Heizelement (16) und einen Eingangsanschluss für die Erfassung der Temperatur des Heizelements (16) aufweist,
- welcher mit einer Temperaturerfassungsvorrichtung (22) elektrisch verbunden ist, wobei die Temperaturerfassungsvorrichtung (22) das Heizelement (16) aufweist, **dadurch gekennzeichnet,**
- **dass** die Temperaturerfassungsvorrichtung (22) eine Kompensationsvorrichtung (50) aufweist, mit welcher von der Temperaturerfassungsvorrichtung (22) Nichtlinearitäten bei Temperaturen oberhalb von 400 °C , insbesondere Nichtlinearitäten des Widerstands des Heizelements (16), kompensierbar sind, und die Kompensationsvorrichtung (50) Nichtlinearitäten der physikalischen Parameter des Heizelements als Temperaturerfassungsvorrichtung berücksichtigt, wobei diese Nichtlinearitäten die Widerstandszunahme bei Temperaturzunahme betreffen; und
- **dass** die Heizungssteuerung (44) ihren Ausgangsanschluss basierend auf dem erfassten Widerstand, oder einer Änderung des Widerstands, des Heizelements (16) oder einem Teil des Heizelementes (16) oder sämtlicher Heizelemente (16,18) und basierend auf der Kompensationsvorrichtung (50) steuert.

2. Dentalofen nach Anspruch 1, **dadurch gekennzeichnet, dass** die Temperaturerfassungsvorrichtung (22) die aktuelle Temperatur des Heizelements (16) durch Ermittlung dessen Widerstands, zu dem auch Scheinwiderstände, also induktive und/oder kapazitive Widerstände, oder hierzu gleichwirkende Parameter, gehören, erfasst.

3. Dentalofen nach einem der vorhergehenden Ansprüche, **dadurch gekennzeichnet, dass** die Temperaturerfassungsvorrichtung (22) zur Ermittlung des Widerstands oder entsprechender physikalischer Parameter einen Strom, insbesondere einen Gleichstrom, durch das Heizelement (16) leitet und den Spannungsabfall an diesem misst.

4. Dentalofen nach einem der vorhergehenden Ansprüche, **dadurch gekennzeichnet, dass** die Temperaturerfassungsvorrichtung (22) zur Ermittlung des Widerstands oder entsprechender physikalischer Parameter eine Spannung, insbesondere eine Gleichspannung, an das Heizelement (16) anlegt und den durch dieses fließenden Strom misst.

5. Dentalofen nach einem der vorhergehenden Ansprüche, **dadurch gekennzeichnet, dass** die Heizungssteuerung (44) die Temperaturerfassungsvorrichtung (22) in einen Regelkreis einbezieht, der basierend auf einem einem Temperaturwert entsprechenden, gemessenen Widerstandswert die Temperatur im Heizraum (12) steuert.

6. Dentalofen nach einem der vorhergehenden Ansprüche, **dadurch gekennzeichnet, dass** die Heizungssteuerung (44) mindestens zwei Regelkreise aufweist oder in diesen ist, von denen ein innererer in an sich bekannter Weise die abgegebene Heizleistung, insbesondere basierend auf einem Strom/Spannungs-Kennlinienfeld, regelt und von denen ein äußererer die Temperaturerfassungsvorrichtung (22) einbezieht, die basierend auf einem einem Temperaturwert entsprechenden, gemessenen Widerstandswert eines Heizelements (16) die Temperatur im Heizraum (12) steuert.

7. Dentalofen nach einem der vorhergehenden Ansprüche, **dadurch gekennzeichnet, dass** die Heizungssteuerung (44) die Heizleistung gepulst abgibt und die Temperaturerfassungsvorrichtung (22) den Widerstand des Heizelements (16) und damit indirekt die Temperatur im Heizraum (12) in Impulspausen der Heizleistung misst.

8. Dentalofen nach einem der vorhergehenden Ansprüche, **dadurch gekennzeichnet, dass** die Heizungssteuerung (44) die Heizleistung gepulst mit einer Pulslänge von 10 msec bis 20 sec und einer Pausenlänge zwischen 2 msec und 10 sec abgibt.

9. Dentalofen nach einem der vorhergehenden Ansprüche, **dadurch gekennzeichnet, dass** die Temperaturerfassungsvorrichtung (22) den Widerstand des Heizelements (16) und damit indirekt die Temperatur im Heizraum (12), insbesondere beim Beginn von Impulspausen der Heizleistung, misst, insbesondere in einem Messzeitraum, der eine Länge von weniger als 10s hat

10. Dentalofen nach einem der vorhergehenden Ansprüche, **dadurch gekennzeichnet, dass** das Heizelement (16) mindestens teilweise aus MoSi oder aus SiC oder aus FeCrAI-Verbindungen resp. FeCrNi-Verbindungen, oder als sonstiges metallkeramisches Heizelement, ausgebildet ist und bei Raumtemperatur einen Widerstand von weniger als 60 Ohm, insbesondere weniger als 10 Ohm hat.

11. Dentalofen nach einem der vorhergehenden Ansprüche, **dadurch gekennzeichnet, dass** die Temperaturerfassungsvorrichtung (22) einen Messstrom abgibt, und einen Spannungsabfall über das Heizelement (16), oder einen Teil dessen oder alle Heizelemente (16,18) als Messspannung misst, wobei insbesondere das Produkt aus Messstrom und Messspannung eine Messleistung von weniger als 10 % der maximalen elektrischen Heizleistung des Dentalofens, insbesondere weniger als 1 % dieser, ergibt, oder der Messstrom dem Heizstrom resp. die Messspannung der Heizspannung entspricht.

12. Dentalofen nach einem der vorhergehenden Ansprüche, **dadurch gekennzeichnet, dass** die Temperaturerfassungsvorrichtung (22) in der Kompensationsvorrichtung (50) eine Lookup-Tabelle aufweist, in welcher in einem Kalibrierschritt erfasste Nichtlinearitäten des Heizelements (16) abgelegt sind, oder eine Funktion ermittelt, welche den Zusammenhang von Widerstand und Temperatur im Heizraum (12) darstellt.

13. Dentalofen nach einem der vorhergehenden Ansprüche, **dadurch gekennzeichnet, dass** der Kalibrierschritt der Temperaturerfassungsvorrichtung (22) Temperaturen zwischen Raumtemperatur und 1900 Grad über den gesamten Temperaturbereich abdeckt.

14. Dentalofen nach einem der vorhergehenden Ansprüche, **dadurch gekennzeichnet, dass** die Temperaturerfassungsvorrichtung (22), insbesondere bei einem Einfahrbrand und/oder einem Regenerationsbrand der Heizelemente (16,18) der Heizvorrichtung (32), ohne zusätzlichen Temperatursensor arbeitet.

15. Dentalofen nach einem der vorhergehenden Ansprüche, **dadurch gekennzeichnet, dass** die Temperaturerfassungsvorrichtung (22) einen Prüfmodus aufweist, in welchem sie den Widerstandswert des Heizelements (16) bei einem vorgegebenen Zustand des Ofens erfasst und die Temperaturerfassungsvorrichtung (22) bei Abweichung des gemessenen Widerstandswerts von einem bei der Kalibrierung ermittelten Widerstandswert um mehr als eine vorgegebene Toleranz von z.B. 10%, die Alterung des Heizelements (16) oder die Notwendigkeit einer Neukalibrierung/eines Service des Ofens feststellt.

16. Dentalofen nach einem der vorhergehenden Ansprüche, **dadurch gekennzeichnet, dass** die Temperaturerfassungsvorrichtung (22) den Messstrom durch das Heizelement (16), und damit den unkompensierten Ausgangswert für die Temperaturmessung, indirekt erfasst, insbesondere über ein Ausgangssignal des Leistungsnetzteils für das Heizelement (16), welches Ausgangssignal einen Parameter insbesondere des Leistungsnetzteiles, wie dessen Verlustleistung, wiedergibt.

## Claims

1. A dental furnace, in particular also for pre-drying dental restoration parts,
- comprising at least one electric heating element (16) which extends adjacent to a heating chamber (12) and is driven by a heating controller (44),
- said heating controller (44) regulating the temperature in the heating chamber (12) and, for this purpose, comprising an output connection for the at least one heating element (16) and an input connection for detecting the temperature of the heating element (16),
- being electrically connected to a temperature detection device (22), the temperature detection device (22) comprising the heating element (16), **characterized in that**
- the temperature detection device (22) comprises a compensation device (50) with which nonlinearities at temperatures above 400°C, in particular nonlinearities of the resistance of the heating element (16), can be compensated by the temperature detection device (22), and the compensation device (50) considering nonlinearities of the physical parameters of the heating element as a temperature detection device, wherein these nonlinearities relate to the increase in resistance when the temperature increases; and
- the heating controller (44) controls its output connection based on the detected resistance, or a change in the resistance, of the heating element (16) or a part of the heating element (16) or all heating elements (16, 18) and based on the compensation device (50).

2. The dental furnace according to claim 1, **characterized in that** the temperature detection device (22) detects the current temperature of the heating element (16) by determining its resistance, which also includes impedance resistances, i.e. inductive and/or capacitive resistances, or parameters acting in the same way.

3. The dental furnace according to any one of the preceding claims, **characterized in that** the temperature detection device (22) for determining the resistance or corresponding physical parameters conducts a current, in particular a direct current, through the heating element (16) and measures the voltage drop thereon.

4. The dental furnace according to any one of the preceding claims, **characterized in that** the temperature detection device (22) applies a voltage, in particular a direct voltage, to the heating element (16) in order to determine the resistance or corresponding physical parameters and measures the current flowing through this heating element.

5. The dental furnace according to any one of the preceding claims, **characterized in that** the heating controller (44) includes the temperature detection device (22) in a control loop which controls the temperature in the heating chamber (12) based on a measured resistance value corresponding to a temperature value.

6. The dental furnace according to any one of the preceding claims, **characterized in that** the heating controller (44) comprises or is in at least two control loops, of which an internal one regulates the heat output in a manner known per se, in particular based on a current/voltage characteristic curve, and of which an external one includes the temperature detection device (22) which controls the temperature in the heating chamber (12) based on a measured resistance value of a heating element (16) corresponding to a temperature value.

7. The dental furnace according to any one of the preceding claims, **characterized in that** the heating controller (44) outputs the heating power in pulses and the temperature detection device (22) measures the resistance of the heating element (16) and thus indirectly the temperature in the heating chamber (12) in pulse pauses of the heating power.

8. The dental furnace according to any one of the preceding claims, **characterized in that** the heating controller (44) outputs the heating power in pulses with a pulse length of 10 msec to 20 sec and a pause length between 2 msec and 10 sec.

9. The dental furnace according to any one of the preceding claims, **characterized in that** the temperature detection device (22) measures the resistance of the heating element (16) and thus indirectly the temperature in the heating chamber (12), in particular at the beginning of pulse pauses of the heating power, in particular in a measurement period which has a length of less than 10s.

10. The dental furnace according to any one of the preceding claims, **characterized in that** the heating element (16) is configured at least partially from MoSi or from SiC or from FeCrAl compounds or FeCrNi compounds, or as another metalceramic heating element, and has a resistance of less than 60 ohms, in particular less than 10 ohms, at room temperature.

11. The dental furnace according to any one of the preceding claims, **characterized in that** the temperature detection device (22) delivers a measuring current and measures a voltage drop across the heating element (16) or part or all of its heating elements (16, 18) as measuring voltage, wherein in particular the product of the measuring current and the measuring voltage results in a measuring power of less than 10% of the maximum electrical heating power of the dental furnace, in particular less than 1% thereof, or the measuring current corresponds to the heating current or the measuring voltage to the heating voltage.

12. The dental furnace according to any one of the preceding claims, **characterized in that** the temperature detection device (22) in the compensation device (50) has a lookup table in which nonlinearities of the heating element (16) detected in a calibration step are stored, or determines a function which represents the relationship between resistance and temperature in the heating chamber (12).

13. The dental furnace according to any one of the preceding claims, **characterized in that** the calibration step of the temperature detection device (22) covers temperatures between room temperature and 1900 degrees over the entire temperature range.

14. The dental furnace according to any one of the preceding claims, **characterized in that** the temperature detection device (22), in particular in the case of a run-in firing and/or a regeneration firing of the heating elements (16, 18) of the heating device (32), operates without an additional temperature sensor.

15. The dental furnace according to any one of the preceding claims, **characterized in that** the temperature detection device (22) has a test mode in which it detects the resistance value of the heating element (16) at a predetermined state of the furnace and the temperature detection device (22) determines the ageing of the heating element (16) or the need of a recalibration/service of the furnace when the measured resistance value deviates from a resistance value determined during calibration by more than a predetermined tolerance of e.g. 10%.

16. The dental furnace according to any one of the preceding claims, **characterized in that** the temperature detection device (22) indirectly detects the measuring current through the heating element (16), and thus the uncompensated output value for the temperature measurement, in particular via an output signal of the power supply unit for the heating element (16), which output signal represents a parameter, in particular of the power supply unit, such as its power loss.

## Revendications

1. Four dentaire, en particulier aussi pour le pré-séchage d'éléments de restauration dentaire,
- avec au moins un élément chauffant électrique (16), qui s'étend contigu à une chambre de chauffage (12) et qui est commandé par une commande de chauffage (44),
- où ladite commande de chauffage (44) régule la température dans la chambre de chauffage (12) et présente à cet effet un raccordement de sortie pour ledit au moins un élément chauffant (16) et un raccordement d'entrée pour la détection de la température de l'élément chauffant (16),
- qui est relié électriquement à un dispositif de détection de température (22), où le dispositif de détection de température (22) présente l'élément chauffant (16), **caractérisé en ce que**
- le dispositif de détection de température (22) présente un dispositif de compensation (50) avec lequel des non-linéarités à des températures supérieures à 400 °C, en particulier des non-linéarités de la résistance de l'élément chauffant (16), peuvent être compensées par le dispositif de détection de température (22), et le dispositif de compensation (50) tient compte des non-linéarités des paramètres physiques de l'élément chauffant en tant que dispositif de détection de température, ces non-linéarités concernant l'augmentation de la résistance en cas d'augmentation de la température ; et
- **en ce que** la commande de chauffage (44) commande sa borne de sortie sur la base de la résistance détectée, ou d'un changement de la résistance, de l'élément chauffant (16) ou d'une partie de l'élément chauffant (16) ou de tous les éléments chauffants (16, 18) et sur la base du dispositif de compensation (50).

2. Four dentaire selon la revendication 1, **caractérisé en ce que** le dispositif de détection de température (22) détecte la température actuelle de l'élément chauffant (16) en déterminant sa résistance, dont font également partie les résistances apparentes, c'est-à-dire les résistances inductives et/ou capacitives, ou les paramètres ayant le même effet.

3. Four dentaire selon l'une des revendications précédentes, **caractérisé en ce que** le dispositif de détection de température (22) fait passer un courant, en particulier un courant continu, à travers l'élément chauffant (16) pour déterminer la résistance ou des paramètres physiques correspondants, et mesure la chute de tension aux bornes de celui-ci.

4. Four dentaire selon l'une des revendications précédentes, **caractérisé en ce que** le dispositif de détection de température (22), pour déterminer la résistance ou des paramètres physiques correspondants, applique une tension, notamment une tension continue, à l'élément chauffant (16) et mesure le courant qui le traverse.

5. Four dentaire selon l'une des revendications précédentes, **caractérisé en ce que** la commande de chauffage (44) intègre le dispositif de détection de température (22) dans un circuit de régulation qui commande la température dans la chambre de chauffage (12) sur la base d'une valeur de résistance mesurée correspondant à une valeur de température.

6. Four dentaire selon l'une des revendications précédentes, **caractérisé en ce que** la commande de chauffage (44) comporte ou est incluse dans au moins deux circuits de régulation, dont l'un plus interne régule de manière connue en soi la puissance de chauffage fournie, en particulier sur la base d'un champ de caractéristiques courant/tension, et dont l'un plus externe inclut le dispositif de détection de température (22) qui commande la température dans la chambre de chauffage (12) sur la base d'une valeur de résistance mesurée correspondant à une valeur de température d'un élément de chauffage (16).

7. Four dentaire selon l'une des revendications précédentes, **caractérisé en ce que** la commande de chauffage (44) délivre la puissance de chauffage par impulsions et le dispositif de détection de température (22) mesure la résistance de l'élément chauffant (16) et par conséquent indirectement la température dans la chambre de chauffage (12) pendant les pauses d'impulsion de la puissance de chauffage.

8. Four dentaire selon l'une des revendications précédentes, **caractérisé en ce que** la commande de chauffage (44) délivre la puissance de chauffage de manière pulsée avec une longueur d'impulsion comprise entre 10 msec et 20 sec et une longueur de pause comprise entre 2 msec et 10 sec.

9. Four dentaire selon l'une des revendications précédentes, **caractérisé en ce que** le dispositif de détection de température (22) mesure la résistance de l'élément chauffant (16) et donc indirectement la température dans la chambre de chauffage (12), en particulier au début des pauses d'impulsion de la puissance de chauffage, notamment dans une période de mesure qui a une longueur inférieure à 10 sec.

10. Four dentaire selon l'une des revendications précédentes, **caractérisé en ce que** l'élément chauffant (16) est réalisé au moins partiellement en MoSi ou en SiC ou en composés de FeCrAl ou en composés de FeCrNi, ou comme autre élément chauffant métallocéramique, et a une résistance inférieure à 60 ohms, en particulier inférieure à 10 ohms, à température ambiante.

11. Four dentaire selon l'une des revendications précédentes, **caractérisé en ce que** le dispositif de détection de température (22) délivre un courant de mesure et mesure une chute de tension aux bornes de l'élément chauffant (16), ou d'une partie de celui-ci, ou de tous les éléments chauffants (16, 18), en tant que tension de mesure, où le produit du courant de mesure et de la tension de mesure donne notamment une puissance de mesure inférieure à 10 % de la puissance de chauffage électrique maximale du four dentaire, en particulier inférieure à 1 % de celle-ci, ou le courant de mesure correspond au courant de chauffage, respectivement la tension de mesure correspond à la tension de chauffage.

12. Four dentaire selon l'une des revendications précédentes, **caractérisé en ce que** le dispositif de détection de température (22) dans le dispositif de compensation (50) présente une table de consultation dans laquelle sont enregistrées les non-linéarités de l'élément chauffant (16) détectées lors d'une étape d'étalonnage, ou détermine une fonction qui représente la relation entre la résistance et la température dans la chambre de chauffage (12).

13. Four dentaire selon l'une des revendications précédentes, **caractérisé en ce que** l'étape d'étalonnage du dispositif de détection de température (22) couvre des températures comprises entre la température ambiante et 1900 degrés sur l'ensemble de la plage de températures.

14. Four dentaire selon l'une des revendications précédentes, **caractérisé en ce que** le dispositif de détection de température (22) fonctionne sans capteur de température supplémentaire, notamment lors d'une cuisson de rodage et/ou d'une cuisson de régénération des éléments chauffants (16, 18) du dispositif de chauffage (32).

15. Four dentaire selon l'une des revendications précédentes, **caractérisé en ce que** le dispositif de détection de température (22) présente un mode de vérification dans lequel il détecte la valeur de résistance de l'élément chauffant (16) dans un état prédéterminé du four et en cas d'écart de la valeur de résistance mesurée par rapport à une valeur de résistance déterminée lors de l'étalonnage supérieure à une tolérance prédéterminée, par exemple de 10%, le dispositif de détection de température (22) détermine le vieillissement de l'élément chauffant (16) ou la nécessité d'un réétalonnage/service du four.

16. Four dentaire selon l'une des revendications précédentes, **caractérisé en ce que** le dispositif de détection de température (22) détecte indirectement le courant de mesure traversant l'élément chauffant (16), et par conséquent la valeur de sortie non compensée pour la mesure de la température, notamment par l'intermédiaire d'un signal de sortie du bloc d'alimentation de puissance pour l'élément chauffant (16), où ledit signal de sortie reproduit un paramètre en particulier du bloc d'alimentation de puissance, tel que sa puissance dissipée.
